# EUROPÄISCHE PATENTSCHRIFT

(11) **EP 1 920 521 B1**
(45) Veröffentlichungstag und Bekanntmachung des Hinweises auf die Patenterteilung: **14.10.2015**
(21) Anmeldenummer: 06777607.0
(22) Anmeldetag: 06.07.2006
(51) Int. Cl.: H02K 1/24

(54) **KLAUENPOLGENERATOR UND VERSCHLUSSKÖRPER FÜR EINEN KLAUENPOLGENERATOR**
CLAW POLE GENERATOR AND CLOSING MEMBER FOR A CLAW POLE GENERATOR
GENERATRICE A POLES A GRIFFES ET ELEMENT DE VERROUILLAGE POUR GENERATRICE A POLES A GRIFFES

(30) Priorität: 19.08.2005 DE 102005039282
(43) Veröffentlichungstag der Anmeldung: 14.05.2008
(73) Patentinhaber: ROBERT BOSCH GMBH, 70442 Stuttgart (DE)
(72) Erfinder: BRAUN, Horst, 70469 Stuttgart (DE); LUTZ, Hans-Joachim, 68623 Lampertheim (DE); GAMM, Oliver, 73054 Eislingen (DE)
(86) Internationale Anmeldenummer: PCT/EP2006/063954
(87) Internationale Veröffentlichungsnummer: WO 2007/020131

(56) Entgegenhaltungen:
- EP-A- 0 720 275
- DE-A1- 10 155 223
- DE-A1- 19 958 503
- US-A- 3 230 404
- US-B1- 6 476 535

## Beschreibung

### Stand der Technik

Bei Klauenpolgeneratoren ist bekannt, dass störende Interferenzgeräusche von Läufer und Ständer entstehen können, wenn die Luftvolumina zwischen den klauenartigen Magnetpolen infolge von Vorsprüngen und Vertiefungen an Ständer und Wickelkopfgeometrie zum Schwingen angeregt werden. Um diesem Problem abzuhelfen, werden Klauenpolverschlüsse eingesetzt, die eine möglichst glatte Außenumfangsfläche des Klauenpolläufers ergeben.

Aus der gattungsbildenden DE 196 42 784 A1 ist ein Klauenpolgenerator mit zwei auf einer Antriebswelle aufgebrachten Polradhälften bekannt, die klauenförmige Magnetpole aufweisen, wobei die Magnetpole der beiden Polradhälften ineinander greifen. Ein ringförmiger, permanentmagnetischer Verschlusskörper ist zwischen benachbarten Magnetpolen vorgesehen. Zwischen den Magnetpolen sind Nuten mit Hinterschneidungen angeordnet, in die zur radialen Fixierung des Verschlusskörpers Vorsprünge des Verschlusskörpers formschlüssig einschiebbar sind.

Weiter ist aus der EP 0 720 275 A2 ein Rotor für eine elektrische Maschine bekannt, während die US 3,230,404 Dämpfungsmittel für Klauenpolrotoren beschreibt. schreibt.

Die vorliegender Erfindung betrifft einen Verschlusskörper zum Verschliessen von Lücken zwischen benachbarten Magnetpolen von zwei Polradhälften eines Klauenpolgenerators gemäss Anspruch 1 und einen Klauenpolgenerator gemäss Anspruch 4. Weitere Ausgestaltungsformen der Erfindung sind in den abhängigen Ansprüchen 2,3 und 5 - 12 definiert.

### Vorteile der Erfindung

Es wird vorgeschlagen, dass bei einem Klauenpolgenerator mit einem Klauenpolläufer Polradhälften mit ihren Magnetpolen in Taschen des Verschlusskörpers so einschiebbar sind, dass der Verschlusskörper die Magnetpole kantenseitig wenigstens bereichsweise umgreift. Dadurch ist die Fertigung der Elemente vereinfacht, da auf werkzeugaufwändige Hinterschneidungen verzichtet werden kann. Die Montage ist ebenfalls vereinfacht. Der Verschlusskörper ist so an die Kontur des Läufers bzw. dessen Magnetpole an-gepasst, dass keine Kanten hervorstehen. Die Geräuschdämmung des Klauenpolgenerators ist verbessert.

Der Verschlusskörper weist zwischen axial benachbarten Taschen jeweils einen schräg zu einer Drehachse verlaufenden Überdeckungssteg auf, der benachbarte Magnetpole außenseitig an ihren seitlichen Kanten überdeckt. Durch diese Ausgestaltung ist es möglich, die Magnetpole formschlüssig in den Taschen sicher zu fixieren. Ein Magnetpol kann mit seiner Spitzen zwischen die beiden seitlichen Überdeckungsstege und die hinter dem Magnetpol befindliche Taschenwand eingeschoben werden.

In einer weiteren günstigen Ausgestaltung decken die Taschen die Magnetpole nur teilweise innenseitig ab. Vorzugsweise sind nur die Spitzen der Magnetpole in die Taschen eingesteckt. Damit kann die Masse und das Trägheitsmoment des Läufers bei montiertem Verschlusskörper vorteilhaft gering gehalten werden.

Weist der Verschlusskörper dabei zwischen jeweils benachbarten Überdeckungsstegen eine Öffnung auf, die eine Polwurzel des jeweiligen sich zwischen den benachbarten Überdeckungsstegen erstreckenden Magnetpols innenseitig freihält, können beträchtliche Gewichtserspamisse erreicht werden. Dadurch kann die Kühlung des Läufers verbessert werden. Bei der Fertigung zeigt sich ferner vorteilhaft, dass das Einfließen von Imprägniermittel, z.B. Imprägnierharz, zur Fixierung einer üblichen Erregerwicklung und zum Verschließen von kleinen Lücken zwischen dem Verschlusskörper und den Magnetpolen vereinfacht wird. Dadurch wird die Geräuschdämmung des Verschlusskörpers weiter verbessert. In einer günstigen Ausgestaltung sind daher Luftspalte zwischen den Magnetpolen und dem Verschlusskörper mit einem Feststoff, vorzugsweise Imprägnierharz, gefüllt. Der Verschlusskörper ist vorzugsweise aus einem unmagnetischen Material gebildet, vorzugsweise aus Aluminium, einer Aluminiumlegierung, einer Magnesiumlegierung oder aus Kunststoff. Es sind keine teuren permanentmagnetischen Materialien notwendig.

In einer günstigen Ausgestaltung liegt ein Verhältnis von Innenradius des Verschlusskörpers zu Außenradius der Polradhälfte höchstens bei 0,98. Bevorzugt ist das Verhältnis im Bereich zwischen 0,95 und 0,85, besonders bevorzugt zwischen 0,94 und 0,87. Es ergibt sich eine besonders günstige Geräuschdämmung.

In einer günstigen Ausgestaltung ist in axialer Richtung ein Überstand über den Taschen ausgebildet, der mindestens 10% länger ist als ein Ständereisen, bevorzugt mindestens 20%, besonders bevorzugt etwa 30% länger ist. Dadurch kann der Einfluss von Geräuschinterferenzen, die vom Wickelkopf, nicht nur vom Ständereisen herrühren, vermindert werden. Die Geräuschdämmung ist weiter verbessert.

Die Kühlung kann vorteilhaft sichergestellt werden, wenn höchstens 60%, besonders bevorzugt höchstens 50% einer Projektionsfläche zwischen den Polwurzeln von einem Lüfter abgedeckt sind.

Weiterhin wird ein Verschlusskörper zum Verschließen von Lücken zwischen benachbarten Magnetpolen von zwei Pohlradhälften eines Klauenpolgenerators vorgeschlagen, der als zickzackförmiger Ring ausgebildet ist, bei dem in der jeweiligen Zackenspitze eine Tasche angeordnet ist.

Erfindungsgemäß sind axial versetzte Taschen mit schräg zu einer Symmetrieachse verlaufenden Überdeckungsstegen verbunden, welche die jeweilige Tasche seitlich überdecken. Es kann eine sichere Führung von Magnetpolen erreicht werden.

Erfindungsgemäß ist innenseitig am Überdeckungssteg ein Steg angeordnet, dessen Höhe einer radialen Tiefe der Taschen entspricht. Eine Verbesserung der mechanischen Stabilität ergibt sich, wenn der Steg von beiden von dem jeweiligen Überdeckungssteg verbundenen Taschen ausgeht. Günstigerweise ist ein Verhältnis zwischen Breite des Stegs und Breite des Überdeckungsstegs weniger als 0,5, insbesondere höchstens 0,4. Material und Gewicht eingespart werden

Gewichtsvorteile können erreicht werden, wenn die Taschen eine Wandstärke von höchstens 2,5 mm, insbesondere 2 mm aufweisen.

Von einem Wicklungskopf eines Ständereisens herrührende Geräuschinterferenzen können im Betrieb vermieden werden, wenn axial über den Taschen ein Überstand angeordnet ist.

Bevorzugt ist der Ring unmagnetisch, wobei Aluminium, eine Aluminiumlegierung, eine Magnesiumlegierung oder Kunststoff bevorzugt ist.

### Zeichnungen

Weitere Ausführungsformen und Vorteile der Erfindung ergeben sich aus nachfolgend anhand von einem in Zeichnungen dargestellten Ausführungsbeispiel der Erfindung.

Im Folgenden zeigen:
Fig.1 eine Seitenansicht eines erfindungsgemäßen Klauenpolgenerators;
Fig. 2 a-c (a) einen erfindungsgemäßen Verschlusskörper, (b) den Verschlusskörper als Schnitt, (c) den Verschlusskörper als Draufsicht;
Fig. 3 einen Schnitt mit Verschlusskörper-Überstand und Ständereisen eines Klauenpolgenerators;
Fig. 4 eine Ansicht von Projektionsflächen zwischen Polwurzeln; und
Fig. 5 Messergebnisse zur Geräuschentwicklung an einem erfindungsgemäßen Klauenpolgenerator.

### Beschreibung des Ausführungsbeispiels

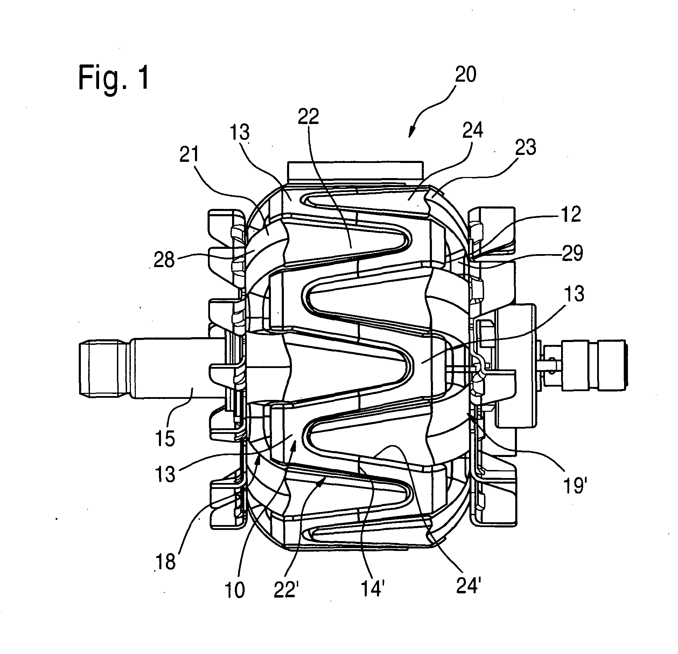

Fig.1 zeigt eine Seitenansicht eines erfindungsgemäßen Klauenpolgenerators 20 mit zwei auf einer Antriebswelle 15 aufgebrachten Polradhälften 21, 23, die klauenförmige Magnetpole 22, 24 aufweisen. Die Magnetpole 22, 24 der beiden Polradhälften 21, 23 greifen ineinander. Zwischen den Magnetpolen 22, 24 ist ein ringförmiger Verschlusskörper 10 angeordnet. Die Polradhälften 21, 23 bilden mit dem Verschlusskörper 10 einen Läufer des Klauenpolgenerators 20. Der Übersichtlichkeit wegen sind nur einige der Elemente beispielhaft mit Bezugszeichen versehen.

Die Magnetpole 22, 24 sind mit ihren Spitzen in den Verschlusskörper 10 eingesteckt, so dass der Verschlusskörper 10 die Magnetpole 22, 24 dort wenigstens bereichsweise umgreift, während die jeweiligen Polwurzeln 28, 29 frei sind. Die Magnetpole 22, 24 gehen von jeweils axial beidseits angeordneten Platinen 18 bzw. 19 aus.

Die Magnetpole 22, 24 sind an ihren seitlichen Kanten 22' bzw. 24' von einem Überdeckungssteg 14' des Verschlusskörpers 10 überdeckt, so dass sie sicher in den Taschen 11 gehalten sind. Die Magnetpole 22, 24 und die Taschen 11 des Verschlusskörpers 10 sind im Bereich der Spitzen der Magnetpole 22, 24 in Umfangsrichtung überlappend angeordnet. Der Verschlusskörper 10 umgreift im Bereich der Taschen 11 die Kanten der Spitzen der Magnetpole 22, 24, lässt jedoch deren nach außen gewandte flachen Seiten praktisch frei.

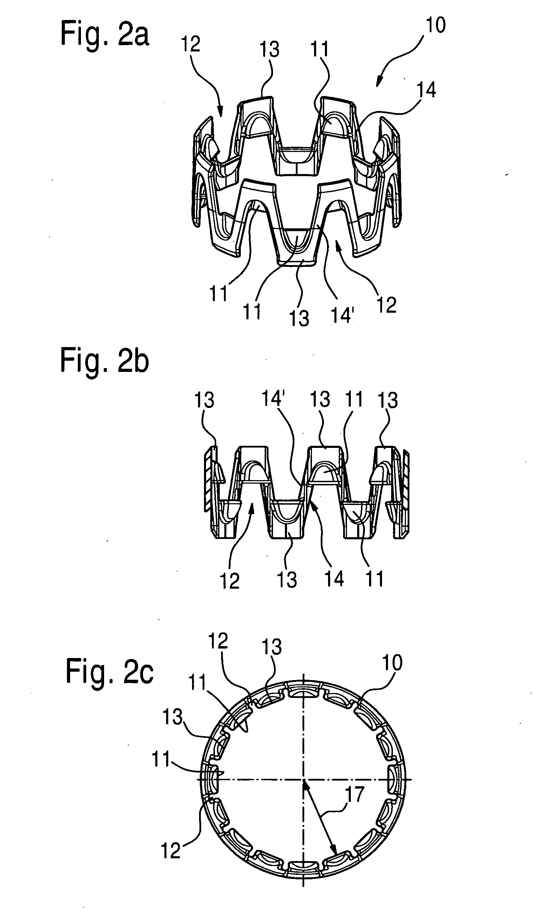

Fig. 2 zeigt einen erfindungsgemäßen Verschlusskörper 10 in verschiedenen Darstellungen im Detail. Der Verschlusskörper 10 dient zum Verschließen von Lücken zwischen benachbarten Magnetpolen 22, 24 von zwei Pohlradhälften 21, 23 eines Klauenpolgenerators 20, die auf einer Antriebswelle 15 angeordnet sind und die klauenförmige Magnetpole 22, 24 aufweisen, wobei die Magnetpole 22, 24 der beiden Polradhälften 21, 23 ineinander greifen, wie in Fig. 1 beschrieben wurde.

Fig. 2a zeigt die Ausgestaltung des Verschlusskörpers 10 als zickzackförmiger Ring, bei dem in der jeweiligen Zackenspitze eine Tasche 11 angeordnet ist. Axial über den einzelnen Taschen 11 erstreckt sich jeweils ein Überstand 13. In die Taschen 11 sind die Polradhälften 21, 23 mit ihren Magnetpolen 22, 24 einschiebbar, wobei der Verschlusskörper 10 mit seinen Taschen 11 die Magnetpole 22, 24 hintergreift. Der Verschlusskörper 10 ist aus einem unmagnetischen Material gebildet.

Zwischen axial versetzen, benachbarten Taschen 11 verläuft jeweils ein schräg zu einer Drehachse 27 verlaufender Überdeckungssteg 14', der die jeweilige Tasche 11 seitlich überdeckt. Im montierten Zustand überdeckt der Überdeckungssteg 14' benachbarte Magnetpole 22, 24 außenseitig an ihren seitlichen Kanten 22', 24', wie in Fig. 1 zu sehen ist. Dadurch umschließt der Verschlusskörper 10 die Magnetpole 22, 24 in diesem Bereich innenseitig und kantenseitig.

Die Taschen 11 decken die Magnetpole 22, 24 nur an deren Spitzen ab, während im Bereich der Polwurzeln 28, 29 Öffnungen 12 vorgesehen sind (siehe Fig. 1). Die Taschen 11 weisen eine Wandstärke von höchstens 2,5 mm, insbesondere 2 mm, auf.

Fig. 2b zeigt einen aufgeschnittenen Verschlusskörper 10. Es ist erkennbar, dass innenseitig am Überdeckungssteg 14' ein Steg 14 angeordnet ist, dessen Höhe ungefähr einer radialen Tiefe der Taschen 11 entspricht. Der Steg 14 geht von beiden von dem jeweiligen Überdeckungssteg 14' verbundenen Taschen 11 aus und erhöht die mechanische Stabilität des Verschlusskörpers 10.

Ein Verhältnis zwischen Breite des Stegs 14 und Breite des Überdeckungsstegs 14' ist vorzugsweise kleiner als 0,5, insbesondere höchstens 0,4.

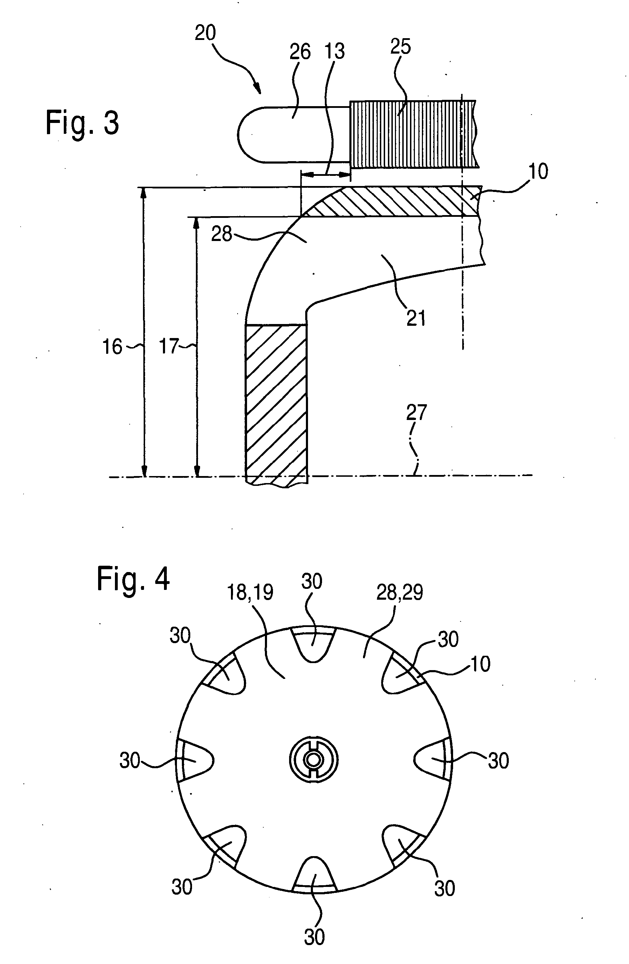

Fig. 2c zeigt eine Draufsicht auf einen erfindungsgemäßen Verschlusskörper mit nach innen weisenden Taschen 11 zur weiteren Erläuterung der Erfindung. Der Verschlusskörper 11 weist einen Innenradius 17 auf, der kleiner ist als ein Außenradius 16 der Polradhälfte 21, 23, wie in Fig. 3 dargestellt ist, die einen Schnitt durch einen Klauenpolgenerator 20 zeigt Da die Kontur des Verschlusskörpers 10 an die des jeweiligen Magnetpols 21, 23 angepasst ist, ergibt sich je nach Innendurchmesser des Verschlusskörpers 10 eine unterschiedliche Länge.

Der Verschlusskörper 10 weist einen Überstand 13 auf, der mindestens 10% länger ist, als ein Ständereisen eines Ständers 25 der Klauenpolmaschine 20, so dass sich der Überstand 13 in einen Zwischenraum zwischen einem Wickelkopf 26 des Ständers 25 und einer Polwurzel 28 eines Magnetpols 21 erstreckt. Der Überstand 13 ist vorzugsweise mindestens 20% länger ist als ein Ständereisen 25, insbesondere etwa 30% länger.

Ein bevorzugtes Verhältnis von Innenradius 17 des Verschlusskörpers 10 zum Außenradius 16 des Läufers beträgt höchstens 0,98, liegt bevorzugt zwischen 0,95 und 0,85, besonders bevorzugt zwischen 0,94 und 0,87.

Die durch den Verschlusskörper 10 zwischen den Polwurzeln 28 bzw. 29 freigehaltene Öffnung 12 wird zumindest teilweise durch üblicherweise stirnseitig beidseitig angebrachte, nicht dargestellte Lüfter versperrt. Die Kühlung wird verbessert, wenn eine geeignet gewählte maximale stirnseitige Versperrung durch die Lüfter nicht überschritten wird.

An der Oberfläche der Polwurzeln 28 bzw. 29 ist der Wärmeübergangskoeffizient und damit die Kühlwirkung am größten. Das gilt besonders für die auflaufenden Seiten der Polwurzeln 28 bzw. 29. Bevorzugt ist höchstens 60%, besonders bevorzugt höchstens 50% einer Projektionsfläche zwischen den Polwurzeln 28 bzw. 29 vom Lüfter abgedeckt. Die Projektionsfläche ist in Fig. 4 erklärt. Bei Draufsicht auf die Platinen 18 oder 19 der jeweiligen Polradhälfte 21, 23 ergibt sich eine Kreisfläche, wobei die Polwurzeln 28 bzw. 29 den Rand der Kreisfläche bilden und jeweils durch Projektionsbereiche 30 getrennt sind. Die einzelnen Projektionsbereiche 30 zwischen den Polwurzeln 28 oder 29 bilden zusammengenommen die Projektionsfläche.

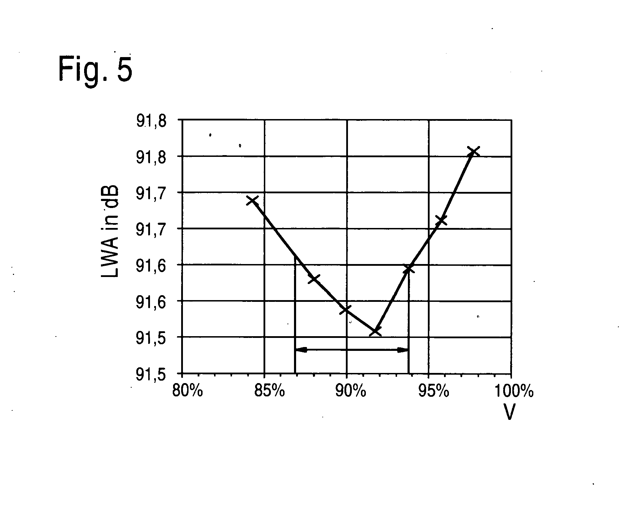

Fig. 5 zeigt Messergebnisse an einem erfindungsgemäßen Klauenpolgenerator, bei dem ein Geräuschsignal LWA über dem Verhältnis V des Innenradius 17 des Verschlusskörpers 10 zum Außenradius 16 des Läufers aufgetragen ist. Es ist deutlich zu erkennen, dass die Kennlinie im Bereich zwischen 0,98 und 0,84 ein ausgeprägtes Minimum aufweist. Bei einem Verhältnis V ist das Signal LWA minimal mit etwa 91,5 dB im Vergleich zu etwa 91,8 dB bei V=0,98.

## Patentansprüche

1. Verschlusskörper (10) zum Verschließen von Lücken zwischen benachbarten Magnetpolen (22, 24) von zwei Polradhälften (21, 23) eines Klauenpolgenerators (20), die auf einer Antriebswelle (15) angeordnet sind und die klauenförmige Magnetpole (22, 24) aufweisen, wobei die Magnetpole (22, 24) der beiden Polradhälften (21, 23) ineinander greifen und der Verschlusskörper (10) als zickzackförmiger Ring ausgestaltet ist, bei dem in der jeweiligen Zackenspitze eine Tasche (11) angeordnet ist, **dadurch gekennzeichnet, dass** axial versetzte Taschen (11) mit schräg zu einer Drehachse (27) verlaufenden Überdeckungsstegen (14') verbunden sind, welche die jeweilige Tasche (11) seitlich überdecken, und innenseitig an dem Überdeckungssteg (14') ein Steg (14) angeordnet ist, dessen Höhe einer radialen Tiefe der Taschen entspricht und der von beiden von dem jeweiligen Überdeckungssteg (14') verbundenen Taschen (11) ausgeht.

2. Verschlusskörper nach Anspruch 1, **dadurch gekennzeichnet, dass** ein Verhältnis zwischen Breite des Stegs (14) und Breite des Überdeckungsstegs (14') weniger als 0,5, insbesondere höchstens 0,4 ist.

3. Verschlusskörper nach Anspruch 1 oder 2, **dadurch gekennzeichnet, dass** die Taschen (11) eine Wandstärke von höchstens 2,5 mm, insbesondere 2 mm, aufweisen.

4. Klauenpolgenerator mit zwei auf einer Antriebswelle (15) aufgebrachten Polradhälften (21, 23), die klauenförmige Magnetpole (22, 24) aufweisen, wobei die Magnetpole (22, 24) der beiden Polradhälften (21, 23) ineinander greifen, und mit einem ringförmigen Verschlusskörper (10) nach einem der Ansprüche 1 bis 3, der zwischen benachbarten Magnetpolen (22, 24) vorgesehen ist, wobei die Polradhälften (21, 23) mit ihren Magnetpolen (22, 24) in Taschen (11) des Verschlusskörpers (10) so einschiebbar sind, dass der Verschlusskörper (10) die Magnetpole (22, 24) kantenseitig wenigstens bereichsweise umgreift.

5. Klauenpolgenerator nach Anspruch 4, **dadurch gekennzeichnet, dass** der Verschlusskörper (10) zwischen axial benachbarten Taschen (11) jeweils einen schräg zu einer Drehachse (27) verlaufenden Überdeckungssteg (14') aufweist, der benachbarte Magnetpole (22, 24) außenseitig an ihren seitlichen Kanten (22', 24') überdeckt.

6. Klauenpolgenerator nach Anspruch 4 oder 5, **dadurch gekennzeichnet, dass** die Taschen (11) die Magnetpole (22, 24) nur teilweise innenseitig abdecken.

7. Klauenpolgenerator nach einem der Ansprüche 4 bis 6, **dadurch gekennzeichnet, dass** der Verschlusskörper (11) zwischen jeweils benachbarten Überdeckungsstegen (14') eine Öffnung (12) aufweist, die eine Polwurzel (28, 29) des jeweiligen sich zwischen den benachbarten Überdeckungsstegen (14') erstreckenden Magnetpols (22, 24) innenseitig freihält.

8. Klauenpolgenerator nach einem der Ansprüche 4 bis 7, **dadurch gekennzeichnet, dass** ein Verhältnis (V) von Innenradius (17) des Verschlusskörpers (10) zu Außenradius (16) der Polradhälfte (21, 23) höchstens 0,98 ist.

9. Klauenpolgenerator nach Anspruch 8, **dadurch gekennzeichnet, dass** das Verhältnis im Bereich zwischen 0,95 und 0,85 liegt, insbesondere zwischen 0,94 und 0,87.

10. Klauenpolgenerator nach einem der Ansprüche 4 bis 9, **dadurch gekennzeichnet, dass** in axialer Richtung durch den Verschlusskörper (10) ein Überstand (13) über den Taschen (11) ausgebildet ist, der mindestens 10% länger ist als ein Ständereisen eines Ständers (25) des Klauenpolgenerators (20), insbesondere etwa 30% länger ist.

11. Klauenpolgenerator nach einem der Ansprüche 4 bis 10, **dadurch gekennzeichnet, dass** Luftspalte zwischen den Magnetpolen (22, 24) und dem Verschlusskörper (10) mit einem Feststoff gefüllt sind.

12. Klauenpolgenerator nach einem der Ansprüche 4 bis 11, **dadurch gekennzeichnet, dass** höchstens 60% einer Projektionsfläche zwischen den Polwurzeln (28, 29) von einem Lüfter abgedeckt sind.

## Claims

1. Closure body (10) for closing gaps between adjacent magnet poles (22, 24) of two pole wheel halves (21, 23) of a claw-pole generator (20) which are arranged on a drive shaft (15) and which have claw-like magnet poles (22, 24), wherein the magnet poles (22, 24) of the two pole wheel halves (21, 23) engage one in the other and the closure body (10) is configured as a jagged ring in which a pocket (11) is arranged in the respective jag tip, **characterized in that** axially offset pockets (11) are connected to overlapping webs (14') which run obliquely to a rotation axis (27) and which laterally overlap the respective pocket (11), and a web (14) is arranged on the inside of the overlapping web (14'), the height of the said web (14) corresponding to a radial depth of the pockets and the said web (14) starting from the two pockets (11) which are connected by the respective overlapping web (14').

2. Closure body according to Claim 1, **characterized in that** a ratio between the width of the web (14) and the width of the overlapping web (14') is less than 0.5, in particular at most 0.4.

3. Closure body according to Claim 1 or 2, **characterized in that** the pockets (11) have a wall thickness of at most 2.5 mm, in particular 2 mm.

4. Claw-pole generator having two pole wheel halves (21, 23) which are fitted on a drive shaft (15) and which have claw-like magnet poles (22, 24), wherein the magnet poles (22, 24) of the two pole wheel halves (21, 23) engage one in the other, and having an annular closure body (10) according to one of Claims 1 to 3 which is provided between adjacent magnet poles (22, 24), wherein the pole wheel halves (21, 23) can be pushed into pockets (11) in the closure body (10) by way of their magnet poles (22, 24) such that the closure body (10) surrounds the edge of the magnet poles (22, 24) at least in regions.

5. Claw-pole generator according to Claim 4, **characterized in that** the closure body (10) has, between axially adjacent pockets (11), in each case one overlapping web (14') which runs obliquely to a rotation axis (27) and overlaps the outside of adjacent magnet poles (22, 24) at their lateral edges (22', 24').

6. Claw-pole generator according to Claim 4 or 5, **characterized in that** the pockets (11) cover the magnet poles (22, 24) only partially on the inside.

7. Claw-pole generator according to one of Claims 4 to 6, **characterized in that** the closure body (10) has an opening (12) between respectively adjacent overlapping webs (14'), the said opening keeping free a pole root (28, 29) of the respective magnet pole (22, 24), which extends between the adjacent overlapping webs (14'), on the inside.

8. Claw-pole generator according to one of Claims 4 to 7, **characterized in that** a ratio (V) of the inside radius (17) of the closure body (10) to the outside radius (16) of the pole wheel halves (21, 23) is at most 0.98.

9. Claw-pole generator according to Claim 8, **characterized in that** the ratio lies in the range of between 0.95 and 0.85, in particular of between 0.94 and 0.87.

10. Claw-pole generator according to one of Claims 4 to 9, **characterized in that** an excess length (13) beyond the pockets (11) is formed by the closure body (10) in the axial direction, the said excess length being at least 10% longer than a stator iron of a stator (25) of the claw-pole generator (20), in particular being approximately 30% longer.

11. Claw-pole generator according to one of Claims 4 to 10, **characterized in that** air gaps between the magnet poles (22, 24) and the closure body (10) are filled with a solid.

12. Claw-pole generator according to one of Claims 4 to 11, **characterized in that** at most 60% of a projection surface between the pole roots (28, 29) is covered by a fan.

## Revendications

1. Corps d'obturation (10) pour l'obturation d'interstices entre des pôles magnétiques (22, 24) voisins de deux moitiés de rotor (21, 23) d'une génératrice à pôles à griffes (20), lesquelles sont disposées sur un arbre d'entraînement (15) et présentent des pôles magnétiques (22, 24) en forme de griffes, dans lequel les pôles magnétiques (22, 24) des deux moitiés de rotor (21, 23) se mettent en prise les uns avec les autres et le corps d'obturation étant réalisé en tant qu'anneau en forme de zigzags où une poche (11) est disposée dans la pointe de dent respective, **caractérisé en ce que** des poches (11) décalées axialement sont reliées avec des nervures de recouvrement (14') s'étendant en biais par rapport à un axe de rotation (27), lesquelles recouvrent latéralement la poche (11) respective, et **en ce que** du côté intérieur, au niveau de la nervure de recouvrement (14'), est disposée une nervure (14) dont la hauteur correspond à une profondeur radiale des poches et laquelle part depuis les deux poches (11) reliées par la nervure de recouvrement (14') respective.

2. Corps d'obturation selon la revendication 1, **caractérisé en ce qu'**un rapport entre la largeur de la nervure (14) et la largeur de la nervure de recouvrement (14') est de moins de 0,5, en particulier au maximum de 0,4.

3. Corps d'obturation selon la revendication 1 ou 2, **caractérisé en ce que** les poches (11) présentent une épaisseur de paroi d'un maximum de 2,5 mm, en particulier de 2 mm.

4. Génératrice à pôles à griffes avec deux moitiés de rotor (21, 23) disposées sur un arbre d'entraînement (15), lesquelles présentent des pôles magnétiques (22, 24) en forme de griffes, dans lequel les pôles magnétiques (22, 24) des deux moitiés de rotor (21, 23) se mettent en prise les uns avec les autres, et avec un corps d'obturation (10) annulaire selon l'une des revendications 1 à 3, lequel est prévu entre des pôles magnétiques (22, 24) voisins, dans lequel les moitiés de rotors (21, 23) peuvent être insérées avec leurs pôles magnétiques (22, 24) dans des poches (11) du corps d'obturation (10) de manière à ce que le corps d'obturation (10) entoure les pôles magnétiques (22, 24) au moins partiellement du côté du bord.

5. Génératrice à pôles à griffes selon la revendication 4, **caractérisée en ce que** le corps d'obturation (10) présente, entre des poches (11) axialement voisines, respectivement une nervure de recouvrement (14') s'étendant en biais par rapport à un axe de rotation (27), laquelle recouvre des pôles magnétiques (22, 24) voisins, du côté extérieur, au niveau de leurs bords latéraux (22', 24').

6. Génératrice à pôles à griffes selon la revendication 4 ou 5, **caractérisée en ce que** les poches (11) recouvrent les pôles magnétiques (22, 24) seulement partiellement du côté intérieur.

7. Génératrice à pôles à griffes selon l'une des revendications 4 à 6, **caractérisée en ce que** le corps d'obturation (10) présente une ouverture (12) entre des nervures de recouvrement (14') respectivement voisines, laquelle garde libre du côté intérieur une racine de pôle (28, 29) du pôle magnétique (22, 24) respectif s'étendant entre les nervures de recouvrement (14') voisines.

8. Génératrice à pôles à griffes selon l'une des revendications 4 à 7, **caractérisée en ce qu'**un rapport (V) entre le rayon intérieur (17) du corps d'obturation (10) et le rayon extérieur (16) des moitiés de rotor (21, 23) est de 0,98 tout au plus.

9. Génératrice à pôles à griffes selon la revendication 8, **caractérisée en ce que** le rapport se situe dans la plage comprise entre 0,95 et 0,85, en particulier entre 0,94 et 0,87.

10. Génératrice à pôles à griffes selon l'une des revendications 4 à 9, **caractérisée en ce qu'**une projection (13) et formée en direction axiale à travers le corps d'obturation (10), au-dessus des poches (11), laquelle projection est au moins de 10 % plus longue qu'un fer statorique d'un stator (25) de la génératrice à pôles à griffes (20), en particulier de l'ordre de 30 % plus longue.

11. Génératrice à pôles à griffes selon l'une des revendications 4 à 10, **caractérisée en ce que** des entrefers entre les pôles magnétiques (22, 24) et le corps d'obturation (10) sont remplis avec une matière solide.

12. Génératrice à pôles à griffes selon l'une des revendications 4 à 11, **caractérisée en ce qu'**un maximum de 60 % d'une surface de projection entre les racines de pôles (28, 29) est recouvert par un ventilateur.
